# EUROPÄISCHE PATENTANMELDUNG

(11) **EP 1 122 448 A1**
(43) Veröffentlichungstag der Anmeldung: **08.08.2001**
(21) Anmeldenummer: 01102020.3
(22) Anmeldetag: 30.01.2001
(51) Int. Cl.: F16B 25/00

(54) **Schraube für Holz oder ähnliche Materialien**

(30) Priorität: 03.02.2000 DE 10004606
(71) Anmelder: SFS Industrie Holding AG, 9435 Heerbrugg (CH)
(72) Erfinder: Mattle, Paul, 9443 Widnau (CH)
(74) Vertreter: Ludescher, Hans

(57) **Zusammenfassung**

Bei einer Schraube (1) für den Einsatz in Holz oder Holzwerkstoffen wird bzw. werden zur Verbesserung der Gleitfunktion und somit zur Verringerung des Einformmomentes der Schaft (2) oder zumindest die mit einem Gewinde (7) versehenen Abschnitte des Schaftes (2) mit einer reibungsvermindernden und hitzebeständigen Beschichtung (8) versehen.

## Beschreibung

Die Erfindung betrifft eine Schraube für den Einsatz in Holz oder Holzwerkstoffen, bestehend aus einem zumindest teilweise mit einem Gewinde versehenen Schaft, gegebenenfalls einem Schraubenkopf sowie einem Werkzeugangriff, wobei wenigstens Teilabschnitte der Schraube mit einer Beschichtung versehen sind.

Beim Einsatz von Schrauben in Holz oder Holzwerkstoffen wirken sich auf die Schrauben relativ hohe Temperaturen aus. Einerseits ergeben sich diese aus der hohen Reibung beim Eindrehen in das Holz oder den Holzwerkstoff, und andererseits ist in dem Werkstoff Holz eine Wärmeableitung praktisch nicht möglich. Um Korrosionsproblemen entgegenzutreten, wurde wohl versucht, solcheSchrauben für den Einsatz in Holz einer Oberflächenbehandlung zu unterziehen, also beispielsweise eine verzinkte Oberfläche vorzusehen. Eine verzinkte Oberfläche hat wohl einen günstigen Einfluß auf die Korrosionsbeständigkeit, trägt jedoch zu einer Erhöhung des Einformmomentes bei, da die Oberfläche weniger glatt ist als ohne diese Beschichtung. Es wurde auch schon versucht, durch eine Wachsbeschichtung sozusagen ein Schmieren der Schraube zu bewirken. Durch die starke Wärmeentwicklung beim Eindrehen der Schraube in Holz, welche trotz der Anordnung des Wachses gegeben ist, schmilzt dieses Wachs und wird praktisch von der umgebenden Wandung des Holzes oder des Holzwerkstoffes aufgesaugt. Je weiter eine Schraube eingedreht werden muß, je länger also diese Schraube ist, umso weniger steht dann Wachsmaterial als Gleitmittel zum Eindrehen der Schraube zur Verfügung.

Die vorliegende Erfindung hat sich daher zur Aufgabe gestellt, eine Schraube für den Einsatz in Holz oder Holzwerkstoffen zu schaffen, mit welcher das Einformmoment und somit auch die Erwärmung der Schraube wesentlich herabgesetzt werden können.

Erfindungsgemäß gelingt dies dadurch, daß der Schaft oder zumindest der bzw. die mit einem Gewinde versehene(n) Abschnitt(e) des Schaftes und gegebenenfalls zusätzlich der Werkzeugangriff und ein eventuell vorhandener Schraubenkopf und gegebenenfalls zusätzlich ein am anderen Ende des Schaftes ausgebildeter Bohransatz mit einer reibungsvermindernden und hitzebeständigen Beschichtung versehen sind.

Gerade durch eine Reibungsverminderung und eine Hitzebeständigkeit wird erreicht, daß einerseits das Einformmoment wesentlich herabgesetzt werden kann und andererseits die eingesetzte Beschichtung einer wesentlich geringeren Wärmebelastung ausgesetzt wird. Es werden dadurch die Gleitfunktionen der einzudrehenden Schraube verbessert, und zwar bis zum endgültigen Einschrauben, auch wenn dies sehr lange, mit einem Gewinde versehene Schrauben sind. Die Vorteile der Reibungsverminderung und Hitzebeständigkeit gelten sowohl für kurze Schrauben als auch für sehr lange Schrauben. Gerade bei sehr langen Schrauben (z.B. 250 - 400 mm Länge) haben sich bisher auch Probleme beim Eindrehvorgang ergeben, da es kaum mehr möglich war, ohne fest eingespanntes Einschraubwerkzeug eine solche Schraube einzudrehen. Durch eine erfindungsgemäße Beschichtung wird das Einformmoment sehr wesentlich herabgesetzt, so daß auch mit einem Handgerät lange Schrauben gesetzt werden können.

Weiter wird vorgeschlagen, daß die Schraube aus rostfreiem Material, insbesondere rostfreiem Stahl besteht und eine Beschichtung aus reibungsverminderndem und hitzebeständigem Material aufgebracht ist. Gerade im Holzbau wurden bisher Schrauben aus rostfreiem Material kaum oder nur in geringem Umfang eingesetzt, da infolge der Erwärmung beim Eindrehen Festigkeitsverluste entstehen könnten. Durch die reibungsvermindernde und hitzebeständige Beschichtung wird ein Eindrehen der Schrauben in Holz oder Holzwerkstoffen ermöglicht, ohne daß es zu einer enormen Wärmebelastung auf die Schraube kommt, da eben bis zum endgültigen Setzen der Schraube die entsprechenden Oberflächenbereiche derselben mit dieser Beschichtung erhalten bleiben. Es hat sich auch bei Versuchen gezeigt, daß die Schraube in der erfindungsgemäßen Ausgestaltung nach dem endgültigen Setzen eine Temperatur aufweist, die weniger als die Hälfte der Temperatur ausmacht, wenn solche Schrauben ohne die reibungsvermindernde und hitzebeständige Beschichtung eingedreht werden.

Eine weitere Möglichkeit wird darin gesehen, daß eine mit einem Korrosionsschutz, z.B. mit einer verzinkten Oberfläche versehene Schraube zusätzlich mit einer reibungsvermindernden und hitzebeständigen Beschichtung versehen ist. Wenn eine aus Kohlenstoffstahl gefertigte Schraube eingesetzt werden soll und ein Korrosionsschutz notwendig ist, dann können eben durch die zusätzliche Beschichtung ein geringeres Einformmoment, eine größere Abriebfestigkeit und eben wesentlich verbesserte Gleitfunktionen erzielt werden. Der Korrosionsschutz, also z.B. die verzinkte Oberfläche, wird beim Eindrehen der Schraube nicht belastet, da dieser von der zusätzlichen Beschichtung abgedeckt ist.

Weiter wird vorgeschlagen, daß die Schraube eine Beschichtung aus reibungsverminderndem und hitzebeständigem polymerischen Material aufweist. Solche Materialien werden in der Regel dort eingesetzt, wo eine besondere Hitzebeständigkeit gegeben sein soll, also beispielsweise auch bei Bratpfannen oder dergleichen. Beim vorliegenden Einsatz bei Schrauben kommt jedoch nicht nur die hitzebeständige Funktion dieses Materials zum Tragen, sondern es wurde festgestellt, daß gerade bei Schrauben für den Einsatz in Holz oder Holzwerkstoffen die reibungsvermindernde Wirkung noch weit höher einzuschätzen ist und gerade durch die Reibungsverminderung die Wärmebelastung auf die Schraube und eventuelle Beschichtungen der Schraube wesentlich herabgesetzt wird.

In besonderer Weise ist es vorteilhaft, wenn die Schraube mit einer Beschichtung aus PTFE (Polytetrafluoräthylen) versehen ist. Es handelt sich hier also um ein an sich bekanntes Material, das für andere Anwendungen bereits bekannt ist. Die Verwendung dieses Materials als Beschichtung für Schrauben für den Einsatz in Holz oder Holzwerkstoffen ist jedoch ein neuer Entwicklungsschritt, der keinesfalls nahegelegen hat. Gerade bei Schrauben ist ja ein entsprechend großer Querschnitt gegeben und daher eine große Anlagefläche in dem Holz bzw. Holzwerkstoff, wobei durch die relativ große Materialverdrängung, die beim Eindrehen erforderlich ist, und auch durch die besondere Länge von Schrauben eine besondere Abrieb- und Wärmebelastung auf die Beschichtung ausgeübt wird. Durch die vorliegende Erfindung ist der Einsatz von Polytetrafluoräthylen bei solchen Schrauben geschaffen worden, und es hat sich gezeigt, daß gerade auf diesem Gebiet eine Beschichtung aus PTFE optimale und bisher nie dagewesene Verbesserungen für Schrauben für den Einsatz in Holz oder Holzwerkstoffen mit sich bringt.

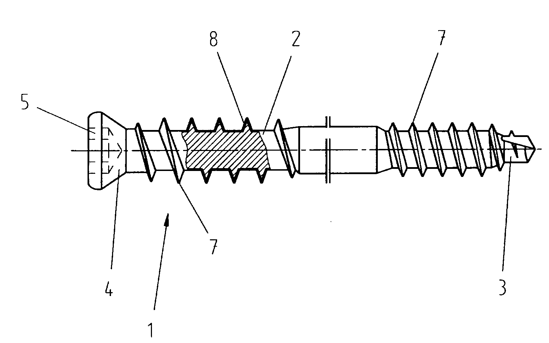

In der Zeichnung ist lediglich schematisch eine Schraube mit einer Beschichtung dargestellt.

Die in der Zeichnung dargestellte Schraube soll lediglich ein Ausführungsbeispiel zur Erläuterung der Erfindung aufzeigen. Bei der vorliegenden Erfindung geht es ganz konkret um das Aufbringen einer Beschichtung auf eine Schraube 1 für den Einsatz in Holz oder Holzwerkstoffen. Es können dabei Schrauben 1 sein, die einen durchgehend oder in bestimmten Abschnitten mit einem Gewinde 7 versehenen Schaft 2 aufweisen, wobei Abschnitte verschiedenen Kern- und/oder Gewindedurchmessers vorhanden sein können. Es ist auch denkbar, durchgehend den gleichen Kerndurchmesser und den gleichen Gewindedurchmesser vorzusehen. Das Gewinde kann ein- oder mehrgängig ausgeführt sein. Am einen Ende des Schaftes 2 ist in der Regel ein Schraubenkopf 4 mit einem Werkzeugangriff 5 vorgesehen. Es kann aber auch eine Schraube mit einem Außenwerkzeugangriff und einer grundsätzlich anderen Form des Schraubenkopfes 4 eingesetzt sein. Am anderen Ende des Schaftes 2 kann eine übliche Spitze, wie sie bei Schrauben für den Einsatz in Holz vorgesehen wird, angeordnet werden. Es ist aber auch möglich, wie dies der Zeichnung zu entnehmen ist, einen besonderen Bohransatz 3 vorzusehen. Eine erfindungsgemäße Schraube kann in gleicher Weise direkt in das Holz oder den Holzwerkstoff eingedreht werden, oder es besteht auch die Möglichkeit, eine solche Schraube in vorgebohrte Löcher einzudrehen.

Das Wesentliche bei der vorliegenden Erfindung liegt darin, daß zumindest Teile der Schraube 1 mit einer reibungsvermindernden und hitzebeständigen Beschichtung 8 versehen sind. Diese Beschichtung 8 wird auf den Schaft 2 zumindest im Bereich der mit einem Gewinde 7 versehenen Abschnitt aufgebracht. Die Beschichtung kann aber auch zusätzlich auf dem eventuell vorhandenen Schraubenkopf 4, im Bereich des Werkzeugangriffes 5 oder auch im Bereich des Bohransatzes 3 aufgebracht werden.

Die Schraube 1 kann auch aus rostfreiem Material, insbesondere rostfreiem Stahl bestehen und mit einer entsprechenden Beschichtung 8 versehen werden. Diese Beschichtung 8 wird ja nicht als Korrosionsschutz aufgebracht, sondern eben zur Verringerung des Einformmomentes, also zur Verbesserung der Gleitfunktion.

Bei einer anderen Konstruktionsvariante ist die Schraube mit einem Korrosionsschutz, z.B. mit einer verzinkten Oberfläche versehen. Zusätzlich wird dann auf diese verzinkte Oberfläche eine reibungsvermindernde und hitzebeständige Beschichtung 8 aufgebracht.

Die Beschichtung besteht aus reibungsverminderndem und hitzebeständigem polymerischen Material und vorteilhaft ganz speziell aus PTFE, also Polytetrafluoräthylen. Es kommt hier also in erster Linie, aber natürlich nicht ausschließlich, ein Material in Betracht, welches einen wesentlichen Anteil an PTFE enthält.

Es können aber auch andere Beschichtungen zum Einsatz kommen, falls sie reibungsvermindernd und hitzebeständig wirken, also die Gleiteigenschaften gegenüber dem unbeschichteten Zustand wesentlich verbessern, also wesentlich bessere Gleiteigenschaften mit sich bringen, als dies durch Polieren oder Verchromen der Schraubenoberfläche der Fall wäre. Obgleich Polytetrafluoräthylen und ähnliche Kunststoffe besonders überraschende Ergebnisse erbringen, lassen sich auch Stoffe wie Molybdändisulfid oder Silikonbeschichtungen erfolgreich bei Schrauben für den Einsatz in Holz oder Holzwerkstoffen einsetzen.

## Patentansprüche

1. Schraube für den Einsatz in Holz oder Holzwerkstoffen, bestehend aus einem zumindest teilweise mit einem Gewinde versehenen Schaft, gegebenenfalls einem Schraubenkopf sowie einem Werkzeugangriff, wobei wenigstens Teilabschnitte der Schraube mit einer Beschichtung versehen sind, **dadurch gekennzeichnet,** daß der Schaft (2) oder zumindest der bzw. die mit einem Gewinde (7) versehene(n) Abschnitt(e) des Schaftes (2) und gegebenenfalls zusätzlich der Werkzeugangriff (5) und ein eventuell vorhandener Schraubenkopf (4) und gegebenenfalls zusätzlich ein am anderen Ende des Schaftes (2) ausgebildeter Bohransatz (3) mit einer reibungsvermindernden und hitzebeständigen Beschichtung (8) versehen sind.

2. Schraube nach Anspruch 1, dadurch gekennzeichnet, daß die Schraube (1) aus rostfreiem Material, insbesondere rostfreiem Stahl besteht und eine Beschichtung (8) aus reibungsverminderndem und hitzebeständigem Material aufgebracht ist.

3. Schraube nach Anspruch 1, dadurch gekennzeichnet, daß eine mit einem Korrosionsschutz, z.B. mit einer verzinkten Oberfläche versehene Schraube (1) zusätzlich mit einer reibungsvermindernden und hitzebeständigen Beschichtung (8) versehen ist.

4. Schraube nach einem der Ansprüche 1 bis 3, dadurch gekennzeichnet, daß die Schraube (1) eine Beschichtung (8) aus reibungsverminderndem und hitzebeständigem polymerischen Material aufweist.

5. Schraube nach einem der Ansprüche 1 bis 4, dadurch gekennzeichnet, daß die Schraube (1) mit einer Beschichtung (8) aus PTFE (Polytetrafluoräthylen) versehen ist.
